# EUROPÄISCHE PATENTANMELDUNG

(11) **EP 4 064 104 A2**
(43) Veröffentlichungstag der Anmeldung: **28.09.2022**
(21) Anmeldenummer: 22163880.2
(22) Anmeldetag: 23.03.2022
(51) Int. Cl.: G06F 30/15, G06F 30/23, G06F 111/10, G06F 119/04

(54) **COMPUTERIMPLEMENTIERTES VERFAHREN ZUR FESTIGKEITSBEWERTUNG FÜR MECHANISCHE BAUTEILE UND MECHANISCHES BAUTEIL**

(30) Priorität: 26.03.2021 AT 502142021
(71) Anmelder: Siemens Mobility Austria GmbH, 1210 Wien (AT)
(72) Erfinder: Hochstrate, Christoph, 8111 Gratwein-Straßengel (AT); Kittinger, Bernhard, 8010 Graz (AT)
(74) Vertreter: Deffner, Rolf

(57) **Zusammenfassung**

Computerimplementiertes Verfahren zur Festigkeitsbewertung für mechanische Bauteile, wobei ein lineares Simulationsmodell erstellt wird, mittels welchem dynamische Eigenschaften zumindest eines ersten Bauteils (1) definiert werden, wobei Eigenmoden ermittelt werden, wobei eine Anzahl von Bewegungsfreiheitsgraden des zumindest ersten Bauteils (1) reduziert wird, wobei eine transiente Anregung auf das zumindest erste Bauteil (1) aufgebracht wird, wobei Festigkeitsbewertungsstellen zumindest des ersten Bauteils (1) definiert werden, und wobei zeitabhängige, modale Funktionen für die Festigkeitsbewertungsstellen gebildet werden.
Es wird vorgeschlagen, dass transiente Ergebniswerte für Festigkeitsparameter zumindest des ersten Bauteils (1) zur Reduktion einer Computerprozessorauslastung mittels linearer Superposition ermittelt werden, und die Ergebniswerte mit Festigkeitsnominalwerten und/oder Festigkeitsgrenzwerten verglichen werden.

Dadurch wird eine vorhandene Rechenkapazität eines Computers unter Erzielung einer möglichst hohen Bauteillebensdauer ressourcenschonend genutzt.

## Beschreibung

Die Erfindung betrifft ein computerimplementiertes Verfahren zur modaltransienten, strukturdynamischen Festigkeitsbewertung für mechanische Bauteile, umfassend die Schritte
- Erstellung eines linearen Simulationsmodells geeignet zur Beanspruchungsermittlung, mittels welchem dynamische Masseneigenschaften, Steifigkeitseigenschaften und Dämpfungseigenschaften zumindest eines ersten Bauteils definiert werden,
- Ermittlung von zumindest einer Massenmatrix, zumindest einer Steifigkeitsmatrix, zumindest einer vollständigen Dämpfungsmatrix, Bildung von Bewegungsgleichungen und Ermittlung von Eigenmoden,
- Reduktion einer Anzahl von Bewegungsfreiheitsgraden des zumindest ersten Bauteils durch Transformation der Bewegungsgleichungen von physikalischen Koordinaten auf modale Koordinaten,
- Aufbringung einer transienten Anregung auf das zumindest erste Bauteil,
- Definition von Festigkeitsbewertungsstellen zumindest des ersten Bauteils, und
- Bildung von zeitabhängigen, modalen Funktionen für die definierten Festigkeitsbewertungsstellen.

Fahrzeugkomponenten, insbesondere Bauteile von Fahrwerken von Schienenfahrzeugen werden durch kontaktmechanische Bedingungen zwischen Rädern und Fahrbahnen bzw. Gleisen zu Schwingungen angeregt, welche sich häufig über einen großen Frequenzbereich erstrecken. Es treten stoßartige Belastungen und Resonanzzustände auf, welche zu starken Materialbeanspruchungen und gegebenenfalls zu schwerwiegenden Schäden an den Fahrzeugkomponenten führen können. Es können Materialermüdung und Bauteilversagen auftreten. Bei Fahrwerken von Schienenfahrzeugen sind insbesondere Anbauteile (z.B. Brems- oder Antennenträger etc.), aber auch Fahrwerksrahmen, Radlager etc. zyklisch hoch beanspruchte Bauteile.

Es besteht oft das Problem, dass fachübliche Dimensionierungsverfahren (z.B. auf Basis quasistatischer Lasten oder von Grenzfrequenzkriterien) für derartige Bauteile mangels ausreichender Prognosegüte zu einer unzureichenden Lebensdauer führen. Mittels dieser fachüblichen Verfahren ist eine Identifikation von höchstbeanspruchten Bauteilen oder Bauteildetails sowie eine hinreichend genaue Quantifizierung von Beanspruchungen oft nicht möglich. Eine Ableitung von Dimensionierungskriterien und Lasten zur Identifikation kritischer Konstruktionsdetails dieser Bauteile schlägt häufig fehl.

Bekannte Verfahren (z.B. auf Basis von Leistungsdichtespektren) bilden dynamische Anregungen von Fahrwerken, insbesondere in Rad-Schiene-Kontakten mit unzureichender Genauigkeit ab oder berücksichtigen zwar ein Eigenschwingungsverhalten dieser Bauteile (z.B. dynamische Zeitschrittverfahren), verursachen aber einen enormen Rechenaufwand bzw. eine übermäßige Bindung von Ressourcen eines Computers.

P. Wolfsteiner und W. Breuer offenbaren in "Fatigue assessment of vibrating rail vehicle bogie components under non-Gaussian random excitations using power spectral densities", Journal of Sound and Vibration, Volume 332, Issue 22, 2013, S. 5867-5882, DOI: 10.1016/j.jsv.2013.06.012, ein Verfahren zur Bewertung einer Ermüdungsbelastung auf Grundlage von Leistungsdichtespektren.

In der Europäischen Norm (EN) 13749, welche sich auf Spezifikationsverfahren für Festigkeitsanforderungen an Fahrwerksrahmen von Schienenfahrzeugen bezieht, ist wiederum ein Verfahren offenbart, bei der zur Nachbildung eines Schwingungsverhaltens eines Bauteils quasistatische Beschleunigungen auf das Bauteil bzw. auf Massenpunkte des Bauteils aufgebracht werden. Eine Auslegung des Bauteils erfolgt mit Lasten aus der EN 13749. Diese Auslegung wird mittels Betriebsmessungen überprüft.

Dieser Ansatz weist in seiner bekannten Form den Nachteil auf, dass bei entsprechenden Ergebnissen aus den Betriebsmessungen gegebenenfalls nachträgliche Änderungen an dem Bauteil umgesetzt werden müssen und die Verfahrensergebnisse ungenau sein können, wodurch möglicherweise Beanspruchungen des Bauteils unterschätzt und mechanisch stark ausgelastete Bereiche des Bauteils nicht identifiziert werden.

Ein Festigkeitsbewertungsverfahren, bei dem spektrale Leistungsdichten aus gemessenen Beschleunigungen ermittelt und auf ein Bauteil aufgebracht werden, ist in der EN 61373 gezeigt, welche sich auf Schwing- und Schockprüfungen bei Schienenfahrzeugen, insbesondere von Anbauteilen, bezieht. Dieser Ansatz weist in seiner bekannten Form den Nachteil auf, dass eine Anwendung des Festigkeitsbewertungsverfahrens häufig zu einer Überdimensionierung von Bauteilen führt, da sich dieses Festigkeitsbewertungsverfahren auf in der Regel eher leichte Elektronikkomponenten bezieht.

Eine Weiterentwicklung des Festigkeitsbewertungsverfahrens aus der EN 61373 wird von M. Schmidt in "Dynamische Lastannahmen und ermüdungsfeste Auslegung von Trägerstrukturen für Zugsicherungsantennen", ZEVrail, Ausgabe 3, 2009, Jahrgang 133, beschrieben.

Weiterhin zeigen Y. Lu, P. Xiang, P. Dong, X. Zhang und J. Zeng in "Analysis of the effects of vibration modes on fatigue damage in high-speed train bogie frames", Engineering Failure Analysis, Volume 89, 2018, S. 222-241, DOI: 10.1016/j.engfailanal.2018.02.025, ein Verfahren zur Bauteilfestigkeitsbewertung bei zyklischer Belastung auf Basis eines nichtlinearen Mehrkörpersimulationsmodells (MKS-Modells). Eine Ermittlung von Festigkeitsparametern ist im Zeitbereich möglich.

Dieser Ansatz weist in seiner bekannten Form den Nachteil auf, dass eine Ermittlung der Festigkeitsparameter aus Gründen einer starken Auslastung von Kapazitäten eines Computers nur über kurze Zeitabschnitte möglich ist.

Der Erfindung liegt daher die Aufgabe zugrunde, ein gegenüber dem Stand der Technik weiterentwickeltes Verfahren anzugeben, welches eine Festigkeitsbewertung von Bauteilen, auf welche zyklische Belastungen wirken, mit einer hohen Genauigkeit, einer geringen Fehleranfälligkeit, unter Berücksichtigung von langen Belastungssequenzen und zugleich einer effizienten Auslastung interner Prozesse eines Computers ermöglicht.

Erfindungsgemäß wird diese Aufgabe gelöst mit einem Verfahren nach Anspruch 1, bei dem
- transiente Ergebniswerte für Festigkeitsparameter zumindest des ersten Bauteils zur Reduktion einer Computerprozessorauslastung mittels linearer Superposition ermittelt werden, und
- die Ergebniswerte mit Festigkeitsnominalwerten und/oder Festigkeitsgrenzwerten für zumindest das erste Bauteil verglichen werden.

Mittels des erfindungsgemäßen Verfahrens wird das modale Verhalten des ersten Bauteils oder einer Mehrzahl an Bauteilen (einer Baugruppe) berücksichtigt. Aufgrund einer moderaten Auslastung eines Computerprozessors (oder einer Mehrzahl von Prozessoren oder Prozessorkernen) durch das erfindungsgemäße Verfahren können Festigkeitsparameter für das gesamte erste Bauteil oder für die gesamte Baugruppe und nicht nur Ausschnitte davon bestimmt werden.

Das erfindungsgemäße Verfahren weist weiterhin den Vorteil auf, dass, aufgrund der genannten moderaten Auslastung des Computers, lange Betriebssequenzen des ersten Bauteils oder der Baugruppe bewertet werden können. Dadurch ist es möglich, ganze Betriebsmessungen an einem Schienenfahrzeug, für die mehrere tausend Kilometer zurückgelegt werden können, nachzubilden, um kritische Schwingungsanregungssequenzen auf das erste Bauteil oder die Baugruppe sowie ein kritisches Schwingverhalten identifizieren zu können. Hier ist insbesondere die lineare Superposition aufgrund ihrer Skalierbarkeit vorteilhaft, weil dadurch Ergebniswerte mit mehreren tausend Zeitschritten an mehreren zehntausend Bewertungsstellen ermittelt werden können. Zugleich trägt die lineare Superposition auch zu einer hohen Recheneffizienz bei, da es sich dabei um ein lineares Lösungsprinzip handelt. Das erste Bauteil oder die Baugruppe können auf die zu erwartenden Belastungen ausgelegt werden. Nachträgliche konstruktive Änderungen (beispielsweise als Ergebnis einer Betriebsmessfahrt und entsprechender Betriebsmessungen) können so vermieden werden.

Ein Zweck, welcher mit dem erfindungsgemäßen Verfahren verfolgt wird, liegt in einer Erhöhung einer Bauteilsicherheit und/oder einer Bauteillebensdauer.

Weitere vorteilhafte Ausgestaltungen des erfindungsgemäßen Elastikelements ergeben sich aus den Unteransprüchen.

Hilfreich ist es, wenn Zeitschritte aus den zeitabhängigen, modalen Funktionen entfernt werden, bei welchen Amplituden einer mittels der zeitabhängigen, modalen Funktionen beschriebenen Schwingung zumindest des ersten Bauteils kleiner als oder gleich groß wie ein definierter Anteil einer Grenzamplitude der Schwingung sind.

Dadurch wird eine hohe Zuverlässigkeit in der Festigkeitsbewertung bei zugleich moderater Prozessorauslastung erreicht, da nur jene Zeitschritte der modalen Funktionen berücksichtigt werden, welche für das Schädigungsverhalten des ersten Bauteils relevant sind.

Eine noch effizientere Nutzung von Computerressourcen wird erreicht, wenn in ihrer Anzahl unlimitierte physikalische Bewegungsfreiheitsgrade des zumindest ersten Bauteils auf eine Anzahl von kleiner als oder gleich 10⁴ modalen Bewegungsfreiheitsgraden reduziert werden.

Durch diese Maßnahme wird ein wesentlicher Beitrag zur Reduktion der Prozessorauslastung geleistet. Schwingungseigenschaften einer Fahrwerkskomponente eines Schienenfahrzeugs lassen sich bereits mit einigen hundert Eigenmoden ausreichend genau beschreiben. Mit der Anzahl von 10⁴ oder weniger modalen Bewegungsfreiheitsgraden werden übliche Anregungsfrequenzbereiche gut abgedeckt und es erfolgt zugleich eine wesentliche Rechenzeitreduktion. Weiterhin werden dadurch die Ergebniswerte der Festigkeitsparameter auf eine Anzahl reduziert, welche eine effektive und rasche maschinelle Auswertung unter geringem Ressourceneinsatz ermöglicht.

Hilfreich ist es außerdem, wenn die transiente Anregung auf das zumindest erste Bauteil aus Beschleunigungsmessungen mittels Sensoren ermittelt wird.

In diesem Zusammenhang kann es jedoch auch vorteilhaft sein, wenn die die transiente Anregung auf das zumindest erste Bauteil aus einer dynamischen Mehrkörpersimulation ermittelt wird.

Dadurch werden eine realitätsnahe Nachbildung des Schwingungsverhaltens des zumindest ersten Bauteils oder der Baugruppe sowie realistische Ergebniswerte der Festigkeitsbewertung erreicht.

Eine Vorzugslösung wird erzielt, wenn als transiente Ergebniswerte für Festigkeitsparameter zumindest des ersten Bauteils Verschiebungen ermittelt werden.

Es kann aber auch günstig sein, wenn als transiente Ergebniswerte für Festigkeitsparameter zumindest des ersten Bauteils Beanspruchungen ermittelt werden.

Die Ergebniswerte (Verschiebungen und/oder Beanspruchungen) können mit entsprechenden Nominal- und/oder Grenzwerten (beispielsweise aus einer Norm) verglichen werden, wodurch Auslastungsgrade des zumindest ersten Bauteils oder der Baugruppe ermittelt werden können.

Eine vorteilhafte Ausgestaltung erhält man, wenn
- in einem Überprüfungsverfahrensdurchgang das Verfahren unter Verzicht auf Entfernung von Zeitschritten aus den zeitabhängigen, modalen Funktionen durchgeführt wird,
- aus dem Überprüfungsverfahrensdurchgang Überprüfungsergebniswerte gebildet werden,
- die Überprüfungsergebniswerte mit den Ergebniswerten verglichen werden, und
- aus einem derartigen Vergleich ein Fehler aufgrund der Entfernung von Zeitschritten aus den zeitabhängigen, modalen Funktionen ermittelt wird.

Durch diese Maßnahme wird ein schrittweises Herantasten an einen optimalen Kompromiss zwischen Genauigkeit der Festigkeitsbewertung und Recheneffizienz ermöglicht. Ist der Fehler zu groß, so müssen bisher aus dem Verfahren entfernte Zeitschritte wieder eingefügt werden. Ist der Fehler klein bzw. ist ein definiertes Fehlermaximum noch nicht erreicht, über ein bisheriges Ausmaß an entfernten Zeitschritten hinaus weitere Zeitschritte entfernt werden.

Eine Auslegung und/oder Prüfung des ersten Bauteils oder der Baugruppe auf Dauerfestigkeit wird erzielt, wenn die Ergebniswerte in einer Dauerfestigkeitsbewertung mit den Festigkeitsnominalwerten und/oder den Festigkeitsgrenzwerten für zumindest das erste Bauteil verglichen werden.

Eine Zeitfestigkeitsauslegung und/oder -Prüfung des ersten Bauteils oder der Baugruppe wird erreicht, wenn die Ergebniswerte in einer Betriebsfestigkeitsanalyse mit den Festigkeitsnominalwerten und/oder den Festigkeitsgrenzwerten für zumindest das erste Bauteil verglichen werden.

Eine Lebensdauersteigerung für Bauteile von Schienenfahrzeugen wird bewirkt, wenn mittels eines erfindungsgemäßen, computerimplementierten Verfahrens ein mechanisches Bauteil konstruiert ist, welches als Fahrwerkskomponente eines Schienenfahrzeugs ausgebildet ist.

Günstig ist es, wenn die Fahrwerkskomponente als Fahrwerksrahmen ausgeführt ist.

Es ist jedoch auch passend, wenn die Fahrwerkskomponente als Radlagergehäuse oder Radsatzlagergehäuse ausgeführt ist. Vorteilhaft ist es weiterhin, wenn die Fahrwerkskomponente als Anbauteil oder Konsole ausgeführt ist.

Der Fahrwerksrahmen, das Radlagergehäuse (oder Radsatzlagergehäuse) und das Anbauteil bzw. die Konsole (z.B. ein Bremsträger oder ein Antennenträger etc.) sind große, stark belastete Komponenten des Schienenfahrzeugs, auf welche auch stoßartige und/oder zyklische Belastungen wirken können. Eine Konstruktion dieser Bauteile mittels des erfindungsgemäßen Verfahrens ist aufgrund der hohen erzielbaren Bauteilsicherheit bei zugleich geringer Prozessorauslastung besonders effektiv.

Nachfolgend wird die Erfindung anhand von Ausführungsbeispielen näher erläutert.

Es zeigen beispielhaft:
- Fig. 1:: Ein Flussdiagramm zu einer beispielhaften Ausführungsvariante eines erfindungsgemäßen Festigkeitsbewertungsverfahrens bezüglich eines ersten Bauteils,
- Fig. 2:: Ein Diagramm, welches eine Frequenz über einer Zeit darstellt, wobei definierte Zeitabschnitte aus dem erfindungsgemäßen Festigkeitsbewertungsverfahren entfernt sind, und
- Fig. 3:: Einen Ausschnitt aus einem Seitenriss eines Fahrwerks eines Schienenfahrzeugs, wobei ein erstes Bauteil als Fahrwerksrahmen und ein zweites Bauteil als erste Radsatzführungsbuchse ausgebildet ist, wobei für das erste Bauteil das erfindungsgemäße Festigkeitsbewertungsverfahren durchgeführt wird.

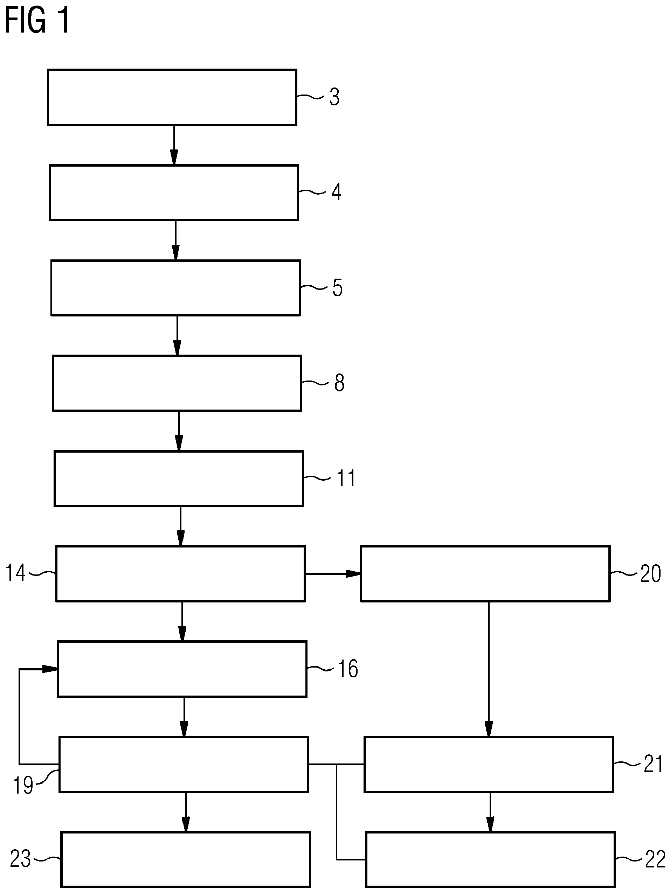

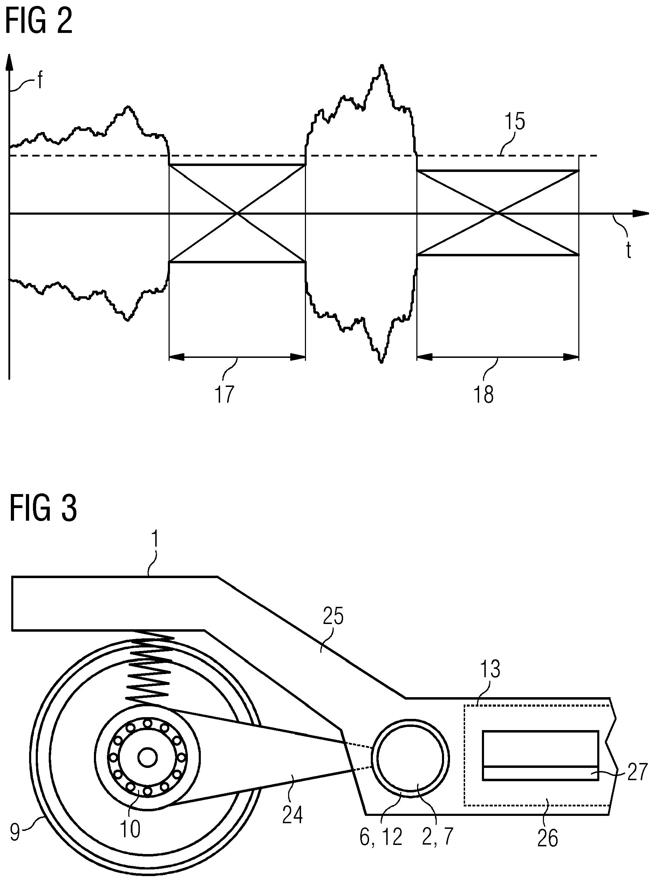

Ein in Fig. 1 als Flussdiagramm dargestelltes computerimplementiertes, modaltransientes, strukturdynamisches Festigkeitsbewertungsverfahren für mechanische Bauteile, wird für ein als Fahrwerksrahmen eines Fahrwerks eines Schienenfahrzeugs ausgebildetes erstes Bauteil 1 angewendet, welches ausschnittsweise in Fig. 3 gezeigt ist.

Zunächst wird in dem Festigkeitsbewertungsverfahren ein lineares Simulationsmodell zur Beanspruchungsermittlung bezüglich des ersten Bauteils 1 erstellt, mittels welchem dynamische Masseneigenschaften, Steifigkeitseigenschaften und Dämpfungseigenschaften des ersten Bauteils 1 definiert werden (Modellbildung 3). Die Masseneigenschaften, Steifigkeitseigenschaften und Dämpfungseigenschaften werden in einer Massenmatrix, einer Steifigkeitsmatrix sowie einer vollständigen Dämpfungsmatrix konzentriert. Es werden daraus Bewegungsgleichungen gebildet und Eigenmoden ermittelt (Eigenmodenermittlung 4).

Ein aus dem Simulationsmodell gebildetes Differentialgleichungssystem aus den Bewegungsgleichungen wird mittels einer modal transienten Simulationsmethode für das erste Bauteil 1 gelöst. Dadurch erfolgt eine Reduktion 5 von in ihrer Anzahl unlimitierten physikalischen Bewegungsfreiheitsgraden des zumindest ersten Bauteils 1 auf eine Anzahl von 10⁴ modalen Bewegungsfreiheitsgraden. Die Reduktion 5 wird mittels Transformation der Bewegungsgleichungen von physikalischen Koordinaten auf modale Koordinaten durchgeführt.

Dann wird eine transiente Weganregung auf das modellierte erste Bauteil 1 in einem ersten Übergangsbereich 6 zu einem zweiten Bauteil 2, welches als in Fig. 3 gezeigte erste Radsatzführungsbuchse 7 ausgebildet ist, aufgebracht. Das erste Bauteil 1 und das zweite Bauteil 2 sind schwingungsfähig und es wird dem ersten Bauteil 1 eine statistische, zeitlich veränderliche Bewegung vorgeschrieben (Anregungsaufbringung 8).

Erfindungsgemäß ist es auch denkbar, statt einer Weganregung eine Beschleunigungsanregung etc. auf das erste Bauteil 1 aufzubringen.

Die transiente Weganregung wird aus Beschleunigungsmessungen mittels Beschleunigungssensoren ermittelt. Diese Beschleunigungsmessungen werden während Testfahrten an einem Testschienenfahrzeug durchgeführt, auf dessen Testfahrwerksrahmen seines Testfahrwerks Beschleunigungssensoren angeordnet sind.

Dabei handelt es sich um eine günstige Lösung. Erfindungsgemäß ist es jedoch auch denkbar, die transiente Weganregung aus einer dynamischen Mehrkörpersimulation mit einem aus dem Stand der Technik bekanntem Computerprogrammprodukt ermittelt wird.

Als erster Übergangsbereich 6 zwischen dem ersten Bauteil 1 und dem zweiten Bauteil 2 ist ein flanschartiger Bereich des Fahrwerksrahmens, der an die erste Radsatzführungsbuchse 7 angrenzt (siehe auch Fig. 3).

Erfindungsgemäß ist es jedoch auch denkbar, dass das erste Bauteil 1 als Radlagergehäuse bzw. Radsatzlagergehäuse ausgebildet ist, welches an sich einen Übergangsbereich zu einem ersten Radsatz 9 bildet. Der erste Radsatz 9 wird in einer derartigen Variante als zweites Bauteil 2 angesehen. In dieser Variante kann die transiente Weganregung beispielsweise unmittelbar am ersten Radsatzlagergehäuse, beispielsweise im Bereich eines ersten Radsatzlagers 10, aufgebracht werden.

Erfindungsgemäß ist es weiterhin denkbar, dass das erste Bauteil 1 als Anbauteil bzw. als Konsole ausgebildet ist, die beispielsweise mit dem Fahrwerksrahmen verbunden ist. Der Übergangsbereich zwischen dem ersten Bauteil 1 und dem Fahrwerksrahmen, der in einer derartigen Variante als zweites Bauteil 2 fungiert, ist in dieser Variante beispielsweise ein Verschraubungsbereich etc. zwischen dem Anbauteil und dem Fahrwerksrahmen.

Auf Grundlage einer Definition von Festigkeitsbewertungsstellen (Bewertungsstellenbildung 11, in Fig. 3 sind beispielhaft eine erste Festigkeitsbewertungsstelle 12 und eine zweite Festigkeitsbewertungsstelle 13 gezeigt) des ersten Bauteils 1 werden aus Lösung des Differentialgleichungssystems zeitabhängige, modale Funktionen für die definierten Festigkeitsbewertungsstellen gebildet (Funktionsbildung 14).

Danach werden Zeitschritte aus den zeitabhängigen, modalen Funktionen entfernt (omittiert), bei welchen die zeitabhängigen, modalen Funktionen keine lokalen Extremwerte aufweisen und bei welchen Amplituden einer mittels der zeitabhängigen, modalen Funktionen beschriebenen Schwingung des ersten Bauteils 1 kleiner als oder gleich groß wie ein definierter Anteil einer in Fig. 2 dargestellten Grenzamplitude 15 der Schwingung ist (Zeitschritteinstellung 16, siehe einen ersten Zeitschritt 17 und einen zweiten Zeitschritt 18, die in Fig. 2 als entfernt dargestellt sind).

Auf Grundlage der Zeitschritteinstellung 16 werden nun transiente Ergebniswerte für Festigkeitsparameter des ersten Bauteils 1 mittels eines aus dem Stand der Technik bekannten linearen Superpositionsprinzips ermittelt (Ergebnisbildung 19), wobei aufgrund des linearen Charakters der Ergebnisbildung 19 eine Computerprozessorauslastung reduziert wird. Bei den Ergebniswerten handelt es sich um Verschiebungen, als Ergebniswerte werden aber auch Dehnungen und Spannungen, d.h. Beanspruchungen des ersten Bauteils 1, ermittelt.

Eine Anzahl an zu entfernenden Zeitschritten kann nachträglich geändert werden, indem in einem Überprüfungsverfahrensdurchgang das erfindungsgemäße Verfahren unter Verzicht auf Entfernung von Zeitschritten aus den zeitabhängigen, modalen Funktionen durchgeführt wird, wobei auf Basis der bereits durchgeführten Modellbildung 3, der Eigenmodenermittlung 4, der Reduktion 5, der Anregungsaufbringung 8, der Bewertungsstellenbildung 11 sowie der Funktionsbildung 14 aus dem Überprüfungsverfahrensdurchgang nach oben beschriebenem Prinzip Überprüfungsergebniswerte gebildet werden (Überprüfungsergebnisbildung 20), die Überprüfungsergebniswerte mit den Ergebniswerten verglichen werden (Ergebnisvergleich 21), und aus dem Ergebnisvergleich 21 ein Fehler aufgrund der Entfernung von Zeitschritten aus den zeitabhängigen, modalen Funktionen ermittelt wird (Fehlerermittlung 22).

Übersteigt der Fehler einen definierten Fehlergrenzwert, so werden entfernte Zeitschritte nach und nach über die Zeitschritteinstellung 16 wieder in das Verfahren eingebracht und es erfolgt, mit den wieder eingefügten Zeitschritten, eine neuerliche Ergebnisbildung 19.

Die Ergebnisbildung 19, der Überprüfungsverfahrensdurchgang und die Zeitschritteinstellung 16 werden iterativ so oft wiederholt, bis der Fehler kleiner als der oder gleich dem Fehlergrenzwert ist.

Erfindungsgemäß ist es jedoch auch möglich, auf den Überprüfungsverfahrensdurchgang zu verzichten und beispielsweise sofort sämtliche Zeitschritte, bei welchen die Amplituden der mittels der zeitabhängigen, modalen Funktionen beschriebenen Schwingung des ersten Bauteils 1 kleiner als oder gleich groß wie der definierte Anteil der Grenzamplitude 15 sind, zu entfernen.

Als Festigkeitsbewertung 23 des ersten Bauteils 1 werden abschließend die Ergebniswerte mit Festigkeitsnominalwerten und Festigkeitsgrenzwerten für das erste Bauteil 1 verglichen. Es handelt sich um Festigkeitsnominalwerte und Festigkeitsgrenzwerte aus Ergebnissen eines standardisierten Wöhlerversuchs. Die Festigkeitsbewertung 23 wird demnach als Dauerfestigkeits- und Zeit- bzw. Betriebsfestigkeitsbewertung durchgeführt.

Auf Basis der Festigkeitsbewertung 23 wird das erste Bauteil 1 dimensioniert. Eine Dimensionierung und eine Geometriefestlegung erfolgt dabei dahingehend, dass mechanische Auslastungsgrade des ersten Bauteils 1 kleiner als eine oder gleich einer Auslastungsgrenze sind.

Fig. 2 zeigt ein Diagramm, welches eine Frequenz f über einer Zeit t darstellt. Das Diagramm stellt ein Schwingungsverhalten eines ersten Bauteils 1, welches im Zusammenhang mit Fig. 1 und Fig. 3 beschrieben ist, dar. Dieses Schwingungsverhalten wird mittels eines in Fig. 1 gezeigten Verfahrens analysiert. Eine Festigkeitsbewertung 23 des ersten Bauteils 1 wird auf Grundlage dieses Schwingungsverhaltens vorgenommen. Ein erster Zeitschritt 17 und ein zweiter Zeitschritt 18 sind aus zeitabhängigen, modalen Funktionen, welche das Schwingungsverhalten beschreiben, entfernt.

Eine entsprechende Entfernung (Omission) wird in einer im Zusammenhang mit Fig. 1 beschriebenen Zeitschritteinstellung 16 durchgeführt, weil der erste Zeitschritt 17 und der zweite Zeitschritt 18 keine lokalen Extremwerte aufweisen und in dem ersten Zeitschritt 17 sowie dem zweiten Zeitschritt 18 Amplituden einer mittels der zeitabhängigen, modalen Funktionen beschriebenen Schwingung des ersten Bauteils 1 kleiner als ein definierter Anteil einer Grenzamplitude 15 der Schwingung sind.

In Fig. 3 ist ein Ausschnitt aus einem Fahrwerk eines Schienenfahrzeugs dargestellt, das ein als Fahrwerksrahmen ausgebildetes erstes Bauteil 1 aufweist. Der Fahrwerksrahmen ist über Radsatzführungsbuchsen, Schwingarme und Radsatzlager mit Radsätzen gekoppelt. Ein in Fig. 3 sichtbarer erster Schwingarm 24 ist über ein als erste Radsatzführungsbuchse 7 ausgebildetes zweites Bauteil 2 mit dem Fahrwerksrahmen und über ein erstes Radsatzlager 10 mit einem ersten Radsatz 9 verbunden. Der erste Schwingarm 24 fungiert in einem dem ersten Radsatz 9 zugewandten, das erste Radsatzlager 10 ummantelnden Bereich als Radsatzlagergehäuse für das erste Radsatzlager 10.

Für das erste Bauteil 1 wird eine Festigkeitsbewertung 23 mittels eines Verfahrens nach Fig. 1 durchgeführt.

Diese Festigkeitsbewertung 23 wird für eine erste Festigkeitsbewertungsstelle 12 in einem flanschartigen ersten Übergangsbereich 6 zwischen dem ersten Bauteil 1 und dem zweiten Bauteil 2, in dem auch eine transiente Weganregung aufgebracht wird, für eine zweite Festigkeitsbewertungsstelle 13 zwischen einem Längsträger 25 des Fahrwerksrahmens und einem Querträger 26 des Fahrwerksrahmens sowie für weitere, in Fig. 3 nicht dargestellte Festigkeitsbewertungsstellen durchgeführt.

Erfindungsgemäß ist es auch vorstellbar, die Festigkeitsbewertung 23 gemäß Fig. 1 für das Radsatzlagergehäuse bzw. den ersten Schwingarm 24 oder einen mit dem Fahrwerksrahmen verbundenen Träger 27, der als Anbauteil bzw. eine Konsole für einen Seitenstromabnehmer fungiert, etc. durchzuführen.

Entsprechende Festigkeitsbewertungsstellen sind hierfür auf dem Radsatzlagergehäuse bzw. auf dem ersten Schwingarm 24 oder auf dem Träger 27 etc. entsprechend einer zu erwartenden mechanischen Auslastung zu wählen.

### Liste der Bezeichnungen

- 1: Erstes Bauteil
- 2: Zweites Bauteil
- 3: Modellbildung
- 4: Eigenmodenermittlung
- 5: Reduktion
- 6: Erster Übergangsbereich
- 7: Erste Radsatzführungsbuchse
- 8: Anregungsaufbringung
- 9: Erster Radsatz
- 10: Erstes Radsatzlager
- 11: Bewertungsstellenbildung
- 12: Erste Festigkeitsbewertungsstelle
- 13: Zweite Festigkeitsbewertungsstelle
- 14: Funktionsbildung
- 15: Grenzamplitude
- 16: Zeitschritteinstellung
- 17: Erster Zeitschritt
- 18: Zweiter Zeitschritt
- 19: Ergebnisbildung
- 20: Überprüfungsergebnisbildung
- 21: Ergebnisvergleich
- 22: Fehlerermittlung
- 23: Festigkeitsbewertung
- 24: Erster Schwingarm
- 25: Längsträger
- 26: Querträger
- 27: Träger

- f: Frequenz
- t: Zeit

## Patentansprüche

1. Computerimplementiertes Verfahren zur modaltransienten, strukturdynamischen Festigkeitsbewertung für mechanische Bauteile, umfassend die Schritte
- Erstellung eines linearen Simulationsmodells geeignet zur Beanspruchungsermittlung, mittels welchem dynamische Masseneigenschaften, Steifigkeitseigenschaften und Dämpfungseigenschaften zumindest eines ersten Bauteils (1) definiert werden,
- Ermittlung von zumindest einer Massenmatrix, zumindest einer Steifigkeitsmatrix, zumindest einer vollständigen Dämpfungsmatrix, Bildung von Bewegungsgleichungen und Ermittlung von Eigenmoden,
- Reduktion einer Anzahl von Bewegungsfreiheitsgraden des zumindest ersten Bauteils (1) durch Transformation der Bewegungsgleichungen von physikalischen Koordinaten auf modale Koordinaten,
- Aufbringung einer transienten Anregung auf das zumindest erste Bauteil (1),
- Definition von Festigkeitsbewertungsstellen zumindest des ersten Bauteils (1), und
- Bildung von zeitabhängigen, modalen Funktionen für die definierten Festigkeitsbewertungsstellen,
**dadurch gekennzeichnet, dass**
- transiente Ergebniswerte für Festigkeitsparameter zumindest des ersten Bauteils (1) zur Reduktion einer Computerprozessorauslastung mittels linearer Superposition ermittelt werden, und
- die Ergebniswerte mit Festigkeitsnominalwerten und/oder Festigkeitsgrenzwerten für zumindest das erste Bauteil (1) verglichen werden.

2. Computerimplementiertes Verfahren nach Anspruch 1, **dadurch gekennzeichnet, dass** Zeitschritte aus den zeitabhängigen, modalen Funktionen entfernt werden, bei welchen Amplituden einer mittels der zeitabhängigen, modalen Funktionen beschriebenen Schwingung zumindest des ersten Bauteils (1) kleiner als oder gleich groß wie ein definierter Anteil einer Grenzamplitude (15) der Schwingung sind.

3. Computerimplementiertes Verfahren nach Anspruch 1 oder 2, **dadurch gekennzeichnet, dass** in ihrer Anzahl unlimitierte physikalische Bewegungsfreiheitsgrade des zumindest ersten Bauteils (1) auf eine Anzahl von kleiner als oder gleich 10⁴ modalen Bewegungsfreiheitsgraden reduziert werden.

4. Computerimplementiertes Verfahren nach einem der Ansprüche 1 bis 3, **dadurch gekennzeichnet, dass** die transiente Anregung auf das zumindest erste Bauteil (1) aus Beschleunigungsmessungen mittels Sensoren ermittelt wird.

5. Computerimplementiertes Verfahren nach einem der Ansprüche 1 bis 4, **dadurch gekennzeichnet, dass** die transiente Anregung auf das zumindest erste Bauteil (1) aus einer dynamischen Mehrkörpersimulation ermittelt wird.

6. Computerimplementiertes Verfahren nach einem der Ansprüche 1 bis 5, **dadurch gekennzeichnet, dass** als transiente Ergebniswerte für Festigkeitsparameter zumindest des ersten Bauteils (1) Verschiebungen ermittelt werden.

7. Computerimplementiertes Verfahren nach einem der Ansprüche 1 bis 6, **dadurch gekennzeichnet, dass** als transiente Ergebniswerte für Festigkeitsparameter zumindest des ersten Bauteils (1) Beanspruchungen ermittelt werden.

8. Computerimplementiertes Verfahren nach Anspruch 2 oder nach Anspruch 2 und einem der Ansprüche 3 bis 7, **dadurch gekennzeichnet, dass**
- in einem Überprüfungsverfahrensdurchgang das Verfahren unter Verzicht auf Entfernung von Zeitschritten aus den zeitabhängigen, modalen Funktionen durchgeführt wird,
- aus dem Überprüfungsverfahrensdurchgang Überprüfungsergebniswerte gebildet werden,
- die Überprüfungsergebniswerte mit den Ergebniswerten verglichen werden, und
- aus einem derartigen Vergleich ein Fehler aufgrund der Entfernung von Zeitschritten aus den zeitabhängigen, modalen Funktionen ermittelt wird.

9. Computerimplementiertes Verfahren nach einem der Ansprüche 1 bis 8, **dadurch gekennzeichnet, dass** die Ergebniswerte in einer Dauerfestigkeitsbewertung mit den Festigkeitsnominalwerten und/oder den Festigkeitsgrenzwerten für zumindest das erste Bauteil (1) verglichen werden.

10. Computerimplementiertes Verfahren nach einem der Ansprüche 1 bis 9, **dadurch gekennzeichnet, dass** die Ergebniswerte in einer Betriebsfestigkeitsanalyse mit den Festigkeitsnominalwerten und/oder den Festigkeitsgrenzwerten für zumindest das erste Bauteil (1) verglichen werden.

11. Mittels eines computerimplementierten Verfahrens nach einem der Ansprüche 1 bis 10 konstruiertes mechanisches Bauteil, welches als Fahrwerkskomponente eines Schienenfahrzeugs ausgebildet ist.

12. Bauteil nach Anspruch 11, **dadurch gekennzeichnet, dass** die Fahrwerkskomponente als Fahrwerksrahmen ausgeführt ist.

13. Bauteil nach Anspruch 11, **dadurch gekennzeichnet, dass** die Fahrwerkskomponente als Radlagergehäuse oder Radsatzlagergehäuse ausgeführt ist.

14. Bauteil nach Anspruch 11, **dadurch gekennzeichnet, dass** die Fahrwerkskomponente als Anbauteil oder Konsole ausgeführt ist.
